# EUROPEAN PATENT SPECIFICATION

(11) **EP 3 434 647 B1**
(45) Date of publication and mention of the grant of the patent: **08.09.2021**
(21) Application number: 17182988.0
(22) Date of filing: 25.07.2017
(51) Int. Cl.: C01F 11/36, C01F 11/44, C05C 5/04, C05B 11/06

(54) **A PROCESS FOR OBTAINING CALCIUM NITRATE CRYSTALS**
VERFAHREN ZUR HERSTELLUNG VON CALCIUMNITRATKRISTALLEN
PROCÉDÉ PERMETTANT D'OBTENIR DES CRISTAUX DE NITRATE DE CALCIUM

(43) Date of publication of application: 30.01.2019
(73) Proprietor: Borealis Agrolinz Melamine GmbH, 4021 Linz (AT)
(72) Inventor: Gabriel, Herbert, A-4076 Marienkirchen (AT); Machl, Doris, A-4931 Mettmach (AT); Schlesinger, Robert, A-4020 Linz (AT); Pfeiffer, Steffen, A4030 Linz (AT); Spiegel, Andreas, A4030 Linz (AT); González Ramòn, Nieves, 76000 Rouen (FR)
(74) Representative: Maikowski & Ninnemann Patentanwälte Partnerschaft mbB

(56) References cited:
- EP-A1- 0 122 646
- US-A- 4 008 309
- US-A1- 2016 257 574
- HANNES HERZEL ET AL: "Sewage sludge ash - A promising secondary phosphorus source for fertilizer production", SCIENCE OF THE TOTAL ENVIRONMENT, vol. 542, 29 August 2015 (2015-08-29), pages 1136-1143, XP055436654, AMSTERDAM, NL ISSN: 0048-9697, DOI: 10.1016/j.scitotenv.2015.08.059

## Description

The present invention relates to a process for obtaining calcium nitrate crystals.

### Description

A typical phosphate rock contains phosphate (equivalent to 25-40 % P₂O₅) and calcium (equivalent to 46-54 % CaO). The contained phosphorus is not available for plants due to the poor water solubility of the mineral. In order to make the phosphorus accessible for the plants a digestion step is necessary.

A typical process therefore is the nitrophosphate process (ODDA process, US 1976283), in which phosphate rock is digested with nitric acid. Phosphoric acid and calcium nitrate are the products of this digestion step.

The ODDA process is based on the following equation:

Ca₃(PO₄)₂ + 6 HNO₃ → 3Ca(NO₃)₂ + 2H₃PO₄

In the ODDA plant rock phosphate from different sources is digested and made available as H₃PO₄ that is subsequently converted to HPO₄²⁻ and H₂PO₄⁻ in the production of phosphorus containing fertilizers

The obtained digestion solution has to be processed in further steps. One option is the separation of the insolubles, e.g. sand, followed by the cooling of the solution. This causes the crystallization of calcium nitrate as calcium nitrate tetrahydrate, which is separated from the crystal suspension and then used as a raw material for Calcium Ammonium Nitrate (CAN) fertilizer.

The crystallization is often hard to control. The crystals formed are very inhomogeneous in terms of particle size and have a relative small particle diameter that makes them difficult to be separated from the mother liquor for instance by filtration or centrifugation. Small crystals may block the filter that is used to separate the crystals, thereby causing severe operation issues. Therefore, depending on the source of the rock phosphate, it is often necessary to use crystallization aids in order to control the particle size of the crystals. Such crystallization aids are e.g. acid insoluble materials such as silicate based minerals. These materials have the severe disadvantages that they are not containing nutrients, thereby diluting the fertilizer, which has a detrimental effect on the application and the economics of the product. Adding large amounts of the crystallization aids may even cause the product to be out of its specified range of nutrient content.

The problem of inhomogeneous crystal size has been addressed with varying success. According to EP 122646 A1 seed material (i.e. calcium nitrate substance) is added to the digestion liquor and an accurate temperature control is applied, for example by using cooling media such as methanol, aqueous ammonia solution or calcium nitrate or other inorganic salts in solution. A similar approach which includes the use of calcium nitrate tetrahydrate in dust form as seeding material is described in US 2,813,777.

Alternatively, a controlled termination of the crystallization at a time point when only 40-60% of the calcium nitrate has been crystallized is described in US 4,008,309. This is a technique to counterbalance the formation of small sized crystals (below 100 micron) that pose difficulties in the filtration.

Patent GB1149310 describes a two-step crystallization process that combines both techniques: a) the seeding with calcium nitrate with b) intermediate separation of the formed large crystals followed by the recovery of the small crystals to be recycled as seeds in the mother liquor.

The drawbacks of the above processes for the manufacturing of phosphate-containing fertilizers from phosphate rock have also been tackled by the use of sulfuric acid instead of nitric acid in the digestion process (see WO0240426 A2).

In any case, the described methods for obtaining calcium nitrate crystals are not satisfactory. It is thus desirable to provide an alternative process that produces calcium nitrate material with low level of impurities, high crystallinity grade and homogeneous crystal sizes.

It is furthermore desirable to provide an alternative base material; i.e. alternative phosphate sources for fertilizers, since the resources of phosphate rock are limited.

These objects are solved by a process for obtaining calcium nitrate crystals as described in the claims.

Accordingly, a process for obtaining calcium nitrate crystals, in particular from phosphate containing materials, is provided which comprises the steps of:
a) providing a mixture comprising phosphate containing rock and sewage sludge ash;
b) digesting the mixture comprising phosphate containing rock and sewage sludge ash by adding nitric acid to the mixture, wherein a digestion liquor comprising calcium nitrate is obtained; and
c) crystallizing calcium nitrate from the digestion liquor and providing a suspension containing calcium nitrate crystals.

In the process of the present invention phosphate containing rock is partially substituted by phosphate containing sewage sludge ash (SSA). Furthermore, by replacing parts of phosphate containing rock with SSA (for example with 2-5 wt% SSA) a faster crystallization rate and larger calcium nitrate crystals are obtained. As additional side effect, a positive contribution to the nutrient balance in the final product is achieved.

Sewage sludge ash is an essential phosphate resource. About 50.000 t phosphorus per year enter the sewage water alone in Germany and are precipitated as metal salts by precipitation aids such as iron or aluminum salts together with the sewage sludge. The phosphate containing sewage sludge is burnt and the ash is disposed or used otherwise for example in road construction.

The present continuous process allows now that a certain fraction of the sewage sludge (the one with relatively small amounts of critical elements such as heavy metals) after having been burnt provides phosphorus containing ash which can replace the rock phosphate in the ODDA process to a certain extent. The ash can be used in the same way as the rock phosphate is used in the ODDA process with no major modifications except the installation of a suitable ash dosage device.

In using the sewage sludge ash two advantages can be achieved: the calcium nitrate crystallization and filtration is enhanced (e.g. larger crystals) without any further need of a crystallization aid. Moreover the ash increases the nutrient content (e.g. P₂O₅) of the final fertilizer.

The change in raw material provides calcium nitrate tetrahydrate crystals that have the advantages of large and homogeneous particle size, and very low impurity content. Therefore, they can be directly used in the production of Calcium Ammonium Nitrate (CAN) fertilizer without intermediate separation/purification or recrystallization steps. Furthermore, since the final product is envisaged for agricultural use, the substitution of the raw material can contribute to an accurate control of the potential undesired impurities (such as heavy metals).

Existing patent literature has described the preparation of phosphate based fertilizers where the source material (sewage sludge ash and/or bone ash) is subjected to acid treatments with sulfuric, phosphoric and/or hydrochloric acid, but none has described or envisaged the use of nitric acid as the acid for the digestion reaction.

In an embodiment of the present process the solid mixture to be digested comprises an amount of phosphate containing rock between 50 and 99.5 wt%, preferably between 70 and 99 wt %, more preferably between 80 and 98 wt%, even more preferably between 90 and 97 wt%. For example, phosphate containing rock may have a phosphorus content, expressed as P₂O₅, of 25-40%, preferably 32-36%.

In another embodiment the solid mixture to be digested comprises an amount of sewage sludge ash between 0.5 and 50 wt%, preferably between 2 and 20 wt%, more preferably between 3 and 10 wt%.

Most preferred examples are mixtures with one of the following ratios:
- 97.5 wt% phosphate containing rock and 2.5 wt% sewage sludge ash;
- 95 wt% phosphate containing rock and 5 wt% sewage sludge ash;
- 92.5 wt% phosphate containing rock and 7.5 wt% sewage sludge ash;
- 90 wt% phosphate containing rock and 10 wt% sewage sludge ash.

The two parts of the mixture are provided as solid material. The phosphate rock is provided as fine, crushed rock; the sewage sludge ash is provided as powder. The typical particle size of the SSA powder may be smaller than 1 mm, preferably smaller 500 µm, more preferably smaller 200 µm (d50 may be below 100 µm).

The two materials are stored separately and then combined directly in the digestion reactor or upfront.

It is furthermore of an advantage, that the sewage sludge ash originates from mono-incineration of municipal sewage sludge. Mono incineration of sewage sludge is necessary in order to avoid further impurities from other waste streams and to avoid dilution of the phosphorous content when other waste streams with no or low phosphorus content are incinerated together with the sewage sludge.

The sewage sludge ash used in the present process may have a P₂O₅ content between 10-30 wt%, preferably 15-25 wt%, more preferably 18-23 wt%.

The composition of the sewage sludge ash varies in certain ranges and depends on the source main ingredients. A preferred example of sewage sludge ash that is used has the following composition:
- P₂O₅ 10-30 wt%, preferably 15-25 wt%, more preferably 18-23wt%;
- CaO 10-30 wt%, preferably 15-25 wt%.

The sewage sludge ash may comprise further:
- SiO₂ 15-30 wt%, preferably 18-27wt%, more preferably 20-23 wt%;
- Fe₂O₃ 5-25 wt%, preferably 7-23 wt%, more preferably 10-20 wt%;
- Al₂O₃ 2-25 wt%, preferably 3-12 wt%, more preferably 4-10 wt%.

The concentration of the nitric acid used in the digestion step may be in a range between 10 and 70%, preferably between 40 and 65, more preferably between 55 und 60%.

In yet a further embodiment of the present process nitric acid (60%) is added in the digestion step in a ratio of the mixture of phosphate containing rock and ash (g) / nitric acid (ml) between 1 : 3, preferably between 1 : 2, more preferably between 1 : 1.7. For example, the ratio may be 1: 1.68 (1.68 ml nitric acid for 1 g solid mixture).

In the digestion process phosphate containing rock and sewage sludge ash are converted to calcium nitrate and phosphoric acid according to the following reactions:
Calcium phosphate: Ca₃(PO₄)₂ + 6 HNO₃ => 3 Ca(NO₃)₂ + 2 H₃PO₄
Whitlockite (in SSA): Ca_{2,86} Mg_{0,14}(PO₄)₂ + 6 HNO₃ => 2,86 Ca(NO₃)₂ + 0,14 Mg(NO₃)₂ + 2 H₃PO₄

The additional components in SSA are digested according to the following reactions:
Iron oxides: Fe₂O₃ + 6 HNO₃ => 2 Fe(NO₃)₃ + 3 H₂O 3 Fe₃O₄ + 28 HNO₃ => 9 Fe(NO₃)₃ + NO + 14 H₂O (NOx formation)
Aluminium oxide: Al₂O₃ + 6 HNO₃ => 2 Al(NO₃)₃ + 3 H₂O

It is furthermore preferred, if the digesting step is carried out at a temperature between 50 and 90°C, preferably between 60 and 80°C, more preferably between 60 and 70°C. For example, the digestion step may be carried out at a temperature range of 65-69°C.

The digestion time may be in a range between 60 and 120 min, preferably between 70 and 100 min, more preferably between 70 and 80 min. For example, the digestion may be carried out at a temperature between 65-69°C for 70-80 min.

It is also preferred, if the digestion mixture is stirred at a speed (in particular in case of a lab size vessel) between 100 and 200 rpm, preferably between 130 and 170 rpm, more preferably at 150 rpm. It is to be understood that the stirring speed depends on the vessel size and may be adjusted accordingly.

In a further embodiment of the present process any solid material is separated from the digestion liquor without cooling. This can be done for example by a filtering step. The sand filtering step is preferably carried out at the temperature of the digestion step, i.e. without cooling in order to avoid premature precipitation of calcium nitrate crystals. The filter pore size is preferably in a range between 100 and 200 µm, preferably 150 µm.

The filtrate is removed and comprises dissolved calcium nitrate and a mixture of phosphoric acid and nitric acid. In addition, the filtrate comprises fine particles (i.e. fine particles from sewage sludge ash) which promote crystallization of calcium nitrate. In particular silicate particles of the ash serve as crystallization seeds in order to improve the crystallization of calcium nitrate which leads also to an improvement of the filtration of calcium nitrate crystals from the digestion liquor. Thus, no additional seeds are added for crystallizing calcium nitrate from the digestion liquor.

In a further embodiment of the present process the calcium nitrate is crystallized from the digestion liquor by decreasing the temperature of the digestion liquor.

In a more specific embodiment of the present process the calcium nitrate is crystallized from the digestion liquor by applying a temperature ramp with a rate between 0.1 - 0.3 K/min, preferably between 0.15 - 0.25 K/min.

The cooling process starts for example at 55°C down to -5°C with a cooling rate between 0.2 - 0.3 K/min, preferably 0.25 K/min. Crystallization of calcium nitrate crystals begins at temperatures between 23-25°C. Due to the heat of crystallization that is released the cooling rate is slightly lowered (shown as a bend in the cooling curve).

In yet a further variant of the present process the crystallization solution is kept at the final temperature for a time period between 60 and 500 min, preferably between 120 and 180 min.

The total crystallization time may range between 240 and 600 min (4-10 h), preferably between 300 and 540 min (5-9 h), more preferably between 360 and 480 min (6-8 h).

The calcium nitrate tetrahydrate crystals (Ca(NO₃)₂*4H₂O) that are obtained in the course of the crystallization process are subsequently filtered off.

The crystals have a medium size between 150 and 800 µm, preferably between 200 and 600 µm, more preferably between 350 and 500 µm. For example, calcium nitrate crystals with a 350-500 µm crystal size are obtained from a mixture of phosphate rock and sewage sludge ash comprising 90-97.5 wt% phosphate rock.

The invention is explained in more detail by means of the following examples with reference to the figures. It shows:
- Figure 1: overview of the nitrophosphate process (ODDA process);
- Figure 2: temperature curve of the calcium nitrate crystallization;
- Figure 3A: microscopic image of Ca(NO₃)₂·4H₂O crystals from the crystallization experiment using 100% phosphate rock;
- Figure 3B: microscopic image of Ca(NO₃)₂·4H₂O crystals from the crystallization experiment using 97.5% phosphate rock and 2.5% SSA;
- Figure 3C: microscopic image of Ca(NO₃)₂·4H₂O crystals from the crystallization experiment using 95% phosphate rock and 5% SSA;
- Figure 3D: microscopic image of Ca(NO₃)₂·4H₂O crystals from the crystallization experiment using 92.5% phosphate rock and 7.5% SSA;
- Figure 4: Quantity and size of crystals from crystallization experiments

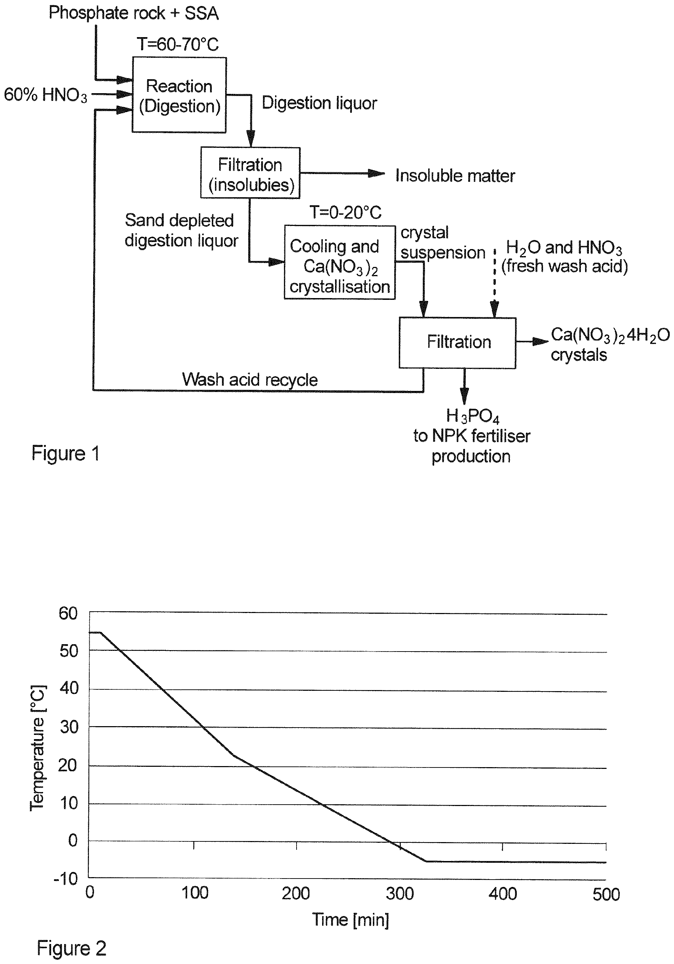

The scheme of Fig 1 illustrates the steps involved in the ODDA process. Phosphate containing rock is digested with 60% HNO₃. The digestion liquor filtered for removing insoluble matter (such as sand) and subsequently cooled down. While cooling down calcium nitrate is crystallized, and the Ca(NO₃)₂*4H₂O crystals are removed by filtration from the crystal suspension. The Ca(NO₃)₂ crystals are used as raw material for Calcium Ammonium Nitrate (CAN) fertilizer. The filtrate containing the phosphate (as phosphoric acid) is subsequently neutralized with ammonia for NPK fertilizer production.

### Example

For calcium nitrate crystallisation experiments the acidic digestion liquor of phosphate rock sewage sludge ash and nitric acid was filtered (pore size: 150µm) at a temperature >55°C by vacuum filtration at 20 mbar under atmospheric pressure. The temperature of the liquor was adjusted at 55°C for 15 min and afterwards the programmed cooling was started down to -5°C at a constant stirring speed of 28 rpm.

The cooling ramp is illustrated in the diagram of Fig 2. The process is started at 50 °C with a stirring rate 28 rpm. The temperature ramp applied is 0,25 K/min => 23 °C, then 0,15 K/min => -5 °C followed by maintaining the final temperature of -5 °C for 3 hours. After a crystallization time of approx 8 h the Ca(NO₃)₂-crystals were filtered off and washed with 300 mL HNO₃ (60%). Afterwards the crystals were separated and dissolved in distilled water and analysed by ICP-OES.

The size of crystals were analysed by a digital microscope from Keyence. The particle size of 60 to 180 crystals was measured to obtain the crystal size distribution.

### Results:

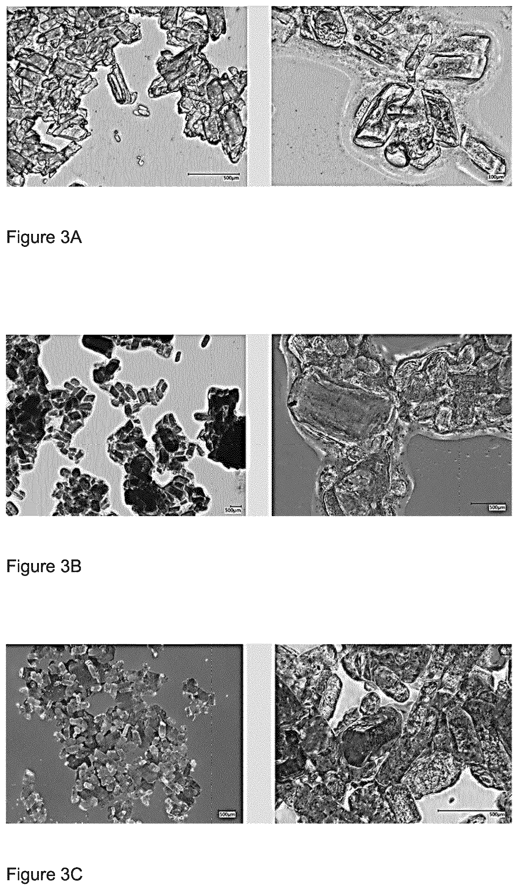

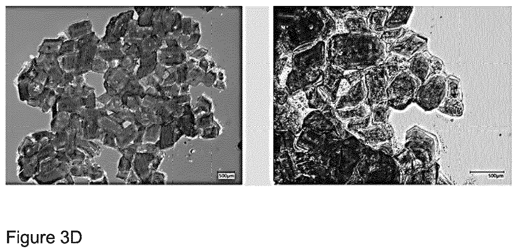

Fig 3A-3D show in each case the macroscopic (left) and microscopic appearance (right) of calcium nitrate crystals from crystallisation experiments with different phosphate rock / SSA ratios. As apparent, the brown colouring of crystal increases with increasing amount of sewage sludge ash.

When using 100% phosphate rock the Ca(NO₃)₂-crystals are whitish (Fig 3A) while already a substitution of phosphate rock with 2.5% SSA provide Ca(NO₃)₂-crystals having a light brownish color (Fig 3B) that intensifies with 5% SSA . For less than 95% phosphate rock the colour of the crystals is a consistent dark brown.

The amount of separated crystals and the crystal size distribution are summarised in Table 1.

**Table 1: Number and size of crystals.**

| | **Number of analysed crystals** | **Median [µm]** | **Min [µm]** | **Max [µm]** | **Mean [µm]** | **Standard deviation [µm]** | **Quantity [g]** | **Quantity [g/gₛᵤₛₚₑₙₛᵢₒₙ]** |
|---|---|---|---|---|---|---|---|---|
| **100** | 90 | 187 | 82 | 621 | 214 | 139 | 107.0 | 0.59 |
| **97.5** | 180 | 488 | 135 | 1,277 | 507 | 154 | 92.2 | 0.50 |
| **95** | 113 | 351 | 148 | 956 | 384 | 145 | 86.6 | 0.47 |
| **92.5** | 79 | 469 | 277 | 1,046 | 487 | 135 | 78.2 | 0.43 |
| **90** | 68 | 467 | 286 | 1,152 | 502 | 162 | 87.3 | 0.47 |
| **87.5** | 79 | 153 | 80 | 753 | 177 | 84 | 70.9 | 0.39 |
| **85** | 111 | 186 | 81 | 689 | 217 | 105 | 75.9 | 0.41 |

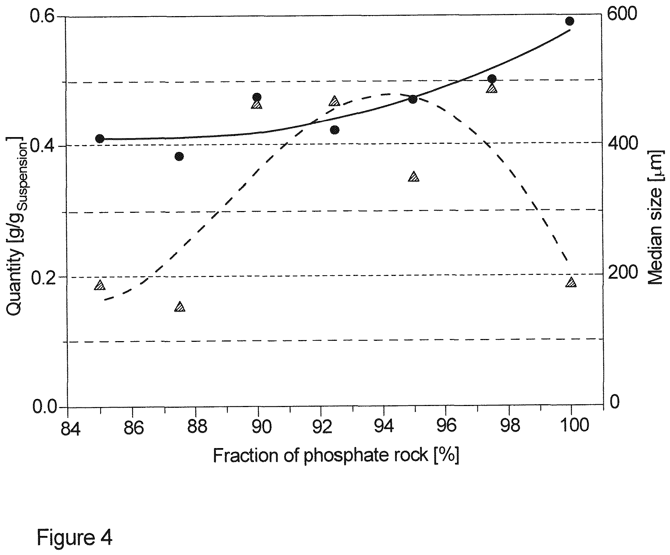

The diagram of Figure 4 shows that the quantity of calcium nitrate crystals decreases with an increasing amount of sewage sludge ash. The calcium content in the liquid phase is decreasing with increasing ash amount due to the lower calcium content in sewage sludge ash.

The highest quantity of crystals was obtained with 100% phosphate rock (0.59 g/g of suspension). However, the washing efficiency was poor due to a small median crystal size of approx. 200 µm when 100% phosphate rock were used. The quantity of crystals produced in the range of 97.5 - 90% phosphate rock stayed constant at approx. 0.5 g/g of suspension.

Additionally, a high and constant crystal median size between 350 and 500 µm was measured also when using the range between 97.5 and 90% phosphate rock.

Furthermore, the crystals in this range are larger (187 µm) compared to those produced with 100% phosphate rock, which is also advantageous for the washing efficiency as well as for the filtration properties.

## Claims

1. A process for obtaining calcium nitrate crystals, in particular from calcium phosphate containing material, comprising the steps of:
a) providing a mixture comprising phosphate containing rock and sewage sludge ash;
b) digesting the mixture comprising phosphate containing rock and sewage sludge ash by adding nitric acid to the mixture, wherein a digestion liquor comprising calcium nitrate is obtained; and
c) crystallizing calcium nitrate from the digestion liquor and providing a suspension containing calcium nitrate crystals.

2. Process according to claim 1, **characterized in that** the mixture to be digested comprises phosphate containing rock in an amount between 50 and 99.5 wt%, preferably between 80 and 98 wt%, more preferably between 90 and 97wt%.

3. Process according to any one of the preceding claims, **characterized in that** the mixture to be digested comprises sewage sludge ash in an amount between 0.5 and 30 wt%, preferably between 2 and 20 wt%, more preferably between 3 and 10 wt%.

4. Process according to any one of the preceding claims, **characterized in that** the sewage sludge ash originates from mono-incineration of municipal sewage sludge.

5. Process according to any one of the preceding claims, **characterized in that** the sewage sludge ash has a P₂O₅ content between 10-30 wt%, preferably 15-25 wt%, more preferably 18-23 wt%.

6. Process according to any one of the preceding claims, **characterized in that** in the digestion step b) nitric acid is added as acid in a ratio of the mixture of phosphate containing rock and ash (g) / nitric acid (ml) between 1 and 3, preferably between 1 and 2, more preferably between 1 and 1.7.

7. Process according to any one of the preceding claims, **characterized in that** the digestion step b) is carried out at a temperature between 50 and 90°C, preferably between 60 and 80 °C, more preferably between 60 and 70 °C.

8. Process according to any one of the preceding claims, **characterized in that** the digestion time in step b) is in a range between 60 and 120 min, preferably between 70 and 100 min, more preferably between 70 and 80 min.

9. Process according to any one of the preceding claims, **characterized in that** after digestion reaction any solid material is separated from the digestion liquor without cooling.

10. Process according to any one of the preceding claims, **characterized in that** the calcium nitrate is crystallized from the digestion liquor by decreasing the temperature of the digestion liquor.

11. Process according to any one of the proceeding claims, **characterized in that** no additional seeds are added for crystallizing calcium nitrate from the digestion liquor.

12. Process according to any one of the preceding claims, **characterized in that** the calcium nitrate is crystallized from the digestion liquor by applying a temperature ramp with a rate between 0.1 - 0.3 K/min, preferably between 0.15 - 0.25 K/min.

13. Process according to any one of the preceding claims, **characterized in that** the crystallization suspension is kept at the final temperature for a time period between 60 and 500 min, preferably between 120 and 180 min.

## Patentansprüche

1. Verfahren zur Herstellung von Calciumnitratkristallen, insbesondere aus calciumphosphathaltigem Material, umfassend die Schritte:
a) Bereitstellen einer Mischung, die phosphathaltiges Gestein und Klärschlammasche enthält;
b) Aufschluss der Mischung aus phosphathaltigem Gestein und Klärschlammasche durch Zugabe von Salpetersäure zu der Mischung, wobei eine Calciumnitrat enthaltende Aufschlussflüssigkeit erhalten wird; und
c) Auskristallisieren von Calciumnitrat aus der Aufschlussflüssigkeit und Bereitstellen einer Suspension, die Calciumnitratkristalle enthält.

2. Verfahren nach Anspruch 1, **dadurch gekennzeichnet, dass** das aufzuschließende Gemisch phosphathaltiges Gestein in einer Menge zwischen 50 und 99,5 Gew.-%, vorzugsweise zwischen 80 und 98 Gew.-%, besonders bevorzugt zwischen 90 und 97 Gew.-% umfasst.

3. Verfahren nach einem der vorhergehenden Ansprüche, **dadurch gekennzeichnet, dass** das aufzuschließende Gemisch Klärschlammasche in einer Menge zwischen 0,5 und 30 Gew.-%, vorzugsweise zwischen 2 und 20 Gew.-%, besonders bevorzugt zwischen 3 und 10 Gew.-% enthält.

4. Verfahren nach einem der vorhergehenden Ansprüche, **dadurch gekennzeichnet, dass** die Klärschlammasche aus der Monoverbrennung von kommunalem Klärschlamm stammt.

5. Verfahren nach einem der vorhergehenden Ansprüche, **dadurch gekennzeichnet, daß** die Klärschlammasche einen P2O₅-Gehalt zwischen 10-30 Gew.-%, vorzugsweise 15-25 Gew.-%, besonders bevorzugt 18-23 Gew.-% aufweist.

6. Verfahren nach einem der vorhergehenden Ansprüche, **dadurch gekennzeichnet, dass** im Aufschlussschritt b) Salpetersäure als Säure in einem Verhältnis des Gemisches aus phosphathaltigem Gestein und Asche (g) / Salpetersäure (ml) zwischen 1 und 3, vorzugsweise zwischen 1 und 2, besonders bevorzugt zwischen 1 und 1,7 zugegeben wird.

7. Verfahren nach einem der vorhergehenden Ansprüche, **dadurch gekennzeichnet, daß** der Aufschlußschritt b) bei einer Temperatur zwischen 50 und 90 °C, vorzugsweise zwischen 60 und 80°C, besonders bevorzugt zwischen 60 und 70°C durchgeführt wird.

8. Verfahren nach einem der vorhergehenden Ansprüche, **dadurch gekennzeichnet, dass** die Aufschlusszeit in Schritt b) in einem Bereich zwischen 60 und 120 min, vorzugsweise zwischen 70 und 100 min, besonders bevorzugt zwischen 70 und 80 min liegt.

9. Verfahren nach einem der vorhergehenden Ansprüche, **dadurch gekennzeichnet, dass** nach der Aufschlussreaktion jegliches Feststoffmaterial aus der Aufschlussflüssigkeit ohne Kühlung abgetrennt wird.

10. Verfahren nach einem der vorhergehenden Ansprüche, **dadurch gekennzeichnet, dass** das Calciumnitrat aus der Aufschlussflüssigkeit durch Absenken der Temperatur der Aufschlussflüssigkeit auskristallisiert wird.

11. Verfahren nach einem der vorhergehenden Ansprüche, **dadurch gekennzeichnet, dass** keine zusätzlichen Kerne zur Kristallisation von Calciumnitrat aus der Aufschlussflüssigkeit zugesetzt werden.

12. Verfahren nach einem der vorhergehenden Ansprüche, **dadurch gekennzeichnet, dass** das Calciumnitrat durch Anlegen einer Temperaturrampe mit einer Rate zwischen 0,1 - 0,3 K/min, vorzugsweise zwischen 0,15 - 0,25 K/min, aus der Aufschlussflüssigkeit auskristallisiert wird.

13. Verfahren nach einem der vorhergehenden Ansprüche, **dadurch gekennzeichnet, dass** die Kristallisationssuspension für eine Zeitdauer zwischen 60 und 500 min, vorzugsweise zwischen 120 und 180 min, auf der Endtemperatur gehalten wird.

## Revendications

1. Procédé d'obtention de cristaux de nitrate de calcium, en particulier à partir d'un matériau contenant du phosphate de calcium, comprenant les étapes consistant à :
a) fournir un mélange comprenant une roche contenant du phosphate et des cendres de boues d'épuration ;
b) digérer le mélange comprenant une roche contenant du phosphate et des cendres de boues d'épuration en ajoutant de l'acide nitrique au mélange, où une liqueur de digestion comprenant du nitrate de calcium est obtenue ; et
c) cristalliser le nitrate de calcium à partir de la liqueur de digestion et fournir une suspension contenant des cristaux de nitrate de calcium.

2. Procédé selon la revendication 1, **caractérisé en ce que** le mélange à digérer comprend une roche contenant du phosphate en une quantité comprise entre 50 et 99,5% en poids, de préférence entre 80 et 98% en poids, plus préférablement entre 90 et 97% en poids.

3. Procédé selon l'une quelconque des revendications précédentes, **caractérisé en ce que** le mélange à digérer comprend des cendres de boues d'épuration en une quantité comprise entre 0,5 et 30% en poids, de préférence entre 2 et 20% en poids, plus préférablement entre 3 et 10% en poids.

4. Procédé selon l'une quelconque des revendications précédentes, **caractérisé en ce que** les cendres de boues d'épuration sont issues de la mono-incinération de boues d'épuration municipales.

5. Procédé selon l'une quelconque des revendications précédentes, **caractérisé en ce que** les cendres de boues d'épuration ont une teneur en P₂O₅ comprise entre 10 et 30% en poids, de préférence 15 et 25% en poids, plus préférablement 18 et 23% en poids.

6. Procédé selon l'une quelconque des revendications précédentes, **caractérisé en ce que** dans l'étape de digestion b) de l'acide nitrique est ajouté sous forme d'acide dans un rapport du mélange roche contenant du phosphate et cendres (g)/acide nitrique (ml) compris entre 1 et 3, de préférence entre 1 et 2, plus préférablement entre 1 et 1,7.

7. Procédé selon l'une quelconque des revendications précédentes, **caractérisé en ce que** l'étape de digestion b) est réalisée à une température comprise entre 50 et 90 °C, de préférence entre 60 et 80 °C, plus préférablement entre 60 et 70 °C.

8. Procédé selon l'une quelconque des revendications précédentes, **caractérisé en ce que** la durée de digestion à l'étape b) se trouve dans une plage comprise entre 60 et 120 min, de préférence entre 70 et 100 min, plus préférablement entre 70 et 80 min.

9. Procédé selon l'une quelconque des revendications précédentes, **caractérisé en ce qu'**après la réaction de digestion, toute matière solide est séparée de la liqueur de digestion sans refroidissement.

10. Procédé selon l'une quelconque des revendications précédentes, **caractérisé en ce que** le nitrate de calcium est cristallisé à partir de la liqueur de digestion en diminuant la température de la liqueur de digestion.

11. Procédé selon l'une quelconque des revendications précédentes, **caractérisé en ce qu'**aucun germe supplémentaire n'est ajouté pour cristalliser le nitrate de calcium à partir de la liqueur de digestion.

12. Procédé selon l'une quelconque des revendications précédentes, **caractérisé en ce que** le nitrate de calcium est cristallisé à partir de la liqueur de digestion en appliquant une rampe de température avec une vitesse comprise entre 0,1 et 0,3 K/min, de préférence entre 0,15 et 0,25 K/min.

13. Procédé selon l'une quelconque des revendications précédentes, **caractérisé en ce que** la suspension de cristallisation est maintenue à la température finale pendant une période comprise entre 60 et 500 min, de préférence entre 120 et 180 min.
